Europäisches Patentamt

European Patent Office

Office européen des brevets

(19)

(11) **EP 1 184 208 B1**

(12) **EUROPEAN PATENT SPECIFICATION**

(45) Date of publication and mention
of the grant of the patent:
**24.11.2004  Bulletin 2004/48**

(51) Int Cl.⁷: **B60C 23/04**, B60C 23/00,
B60C 23/06

(21) Application number: **01307474.5**

(22) Date of filing: **03.09.2001**

(54) **Apparatus and method for alarming decrease in tyre air pressure**

Gerät und Verfahren zum Detektieren eines Druckabfalls im Reifen

Appareil et procédé concernant la détection d'une baisse de pression dans un pneumatique

(84) Designated Contracting States:
**DE FR GB**

(30) Priority: **05.09.2000  JP 2000269049**

(43) Date of publication of application:
**06.03.2002  Bulletin 2002/10**

(73) Proprietors:
• **Sumitomo Rubber Industries Ltd.**
  **Kobe-shi, Hyogo-ken (JP)**
• **SUMITOMO ELECTRIC INDUSTRIES, LTD.**
  **Osaka-shi, Osaka-fu (JP)**

(72) Inventor: **Sugisawa, Toshifumi,**
**c/o Sumitomo Rubber Ind. Ltd.**
**Kobe-shi, Hyogo-ken (JP)**

(74) Representative: **Manitz, Finsterwald & Partner**
**Postfach 31 02 20**
**80102 München (DE)**

(56) References cited:
**EP-A- 0 341 226**          **WO-A-00/49680**
**DE-C- 19 605 458**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

The present invention relates to an apparatus and a method for alarming a decrease in tyre air pressure and, more particularly, to an apparatus and a method for alarming a decrease in tyre air pressure, which can teach a route to a blowout repairing facility which is open and can contribute to safe travelling.

An apparatus according to the features of the preamble of claim 1 is shown in WO 00/49680.

It is most dangerous in the case of a tyre blowout that a driver continues travelling without any awareness of the blowout. In view of this, it is known to provide a tyre air pressure alarming apparatus (DWS) for giving an alarm to a driver about a decrease in pressure.

However, even if the alarming apparatus can detect the tyre deflation so as to prevent an accident, present systems give no help towards repairing the tyre.

Also should a deflation alarm be given during travelling on an expressway, it is difficult for a driver to judge how far it is to the next service area or how far the deflated tyre will endure further use. Therefore, many drivers stop their cars on a shoulder of the expressway to replace the deflated tyre even in the case where the tyre could endure travelling to the next service area. However, it is dangerous to replace a tyre on the shoulder of the expressway.

Furthermore, since tyre repair facilities which are open may be limited in number during travelling in, for example, a suburb of a city at night-, it is difficult for a driver to find such a facility when needed.

Moreover, a driver can be exposed to danger when replacing a deflated tyre in some regions where there may be a risk of personal safety.

Consequently, although the conventional apparatus for alarming a decrease in tyre air pressure can prevent subsequent accidents such apparatus does not eliminate all the dangers particularly for the cases where the driver replaces the tyre on the road shoulder of the expressway or in a region of danger.

In view of the above-described circumstances, an object of the present invention is to provide an apparatus and a method for alarming a decrease in tyre air pressure, which can teach a route to a tyre repair facility which is open and thus can assist safe travelling.

According to one aspect of the present invention, there is provided an apparatus for alarming a decrease in tyre air pressure which alarms a decrease in inner pressure of a tyre by using a judged value, characterised by travelling determining means for determining whether the vehicle should be stopped at once or the vehicle can still travel to some extent when the decrease in tyre air pressure is judged; vehicle position detecting means for detecting the vehicle travelling position at the time of judgement of the decrease in tyre air pressure; collating means for collating the detected vehicle travelling position with positional information on a tyre repair facility, which has been input previously;

facility calling means for calling a nearest tyre repair facility being open based on the collation by the collating means; and display means for displaying a route from the vehicle travelling position to the called facility, wherein the vehicle position detecting means, the collating means, the facility calling means and the display means are started to be operated in the case where the travelling determining means determines that the vehicle can still travel to some extent.

According to a second aspect of the present invention, there is provided an apparatus for alarming a decrease in tyre air pressure which alarms a decrease in inner pressure of the tyre by using a judged value, characterised by vehicle position detecting means for detecting a vehicle travelling position at the time of judgement of the decrease in tyre air pressure; collating means for collating the detected vehicle travelling position with positional information on a tyre repair facility, which has been input previously; and threshold value changing means for changing a threshold value of the judgement of the decrease in inner pressure of the tyres according to the vehicle travelling position.

The method for alarming the decrease in inner pressure may use a judged value calculated based on rotational information obtained from tyres fitted to a four-wheeled vehicle.

According to another aspect of the present invention, there is provided a method for alarming a decrease in tyre air pressure which alarms the decrease in inner pressure of the tyre by using a judged value, characterised in that it comprises the steps of: detecting a vehicle travelling position at the time of judgement of the decrease in tyre air pressure; collating the detected vehicle travelling position with positional information on a tyre repair facility, which has been input previously; calling the nearest open tyre repair facility based on the collation; and displaying a route from the vehicle travelling position to the called facility, wherein the steps are started to be performed in the case where it is determined that the vehicle can still travel to some extent.

Yet another aspect provides a method for alarming a decrease in tyre air pressure which alarms the decrease in inner pressure of the tyre by using a judged value, characterised by the steps of: detecting a vehicle travelling position at the time of judgement of the decrease in tyre air pressure; collating the detected vehicle travelling position with positional information on a tyre repair facility, which has been input previously; and changing a threshold value for the judgement of the decrease in inner pressure of the tyres according to the vehicle travelling position.

In the method the alarm for decrease in inner pressure may utilise a judged value calculated based on rotational information obtained from tyres fitted to a four-wheeled vehicle.

An apparatus and a method for alarming a decrease in tyre air pressure according to the present invention will be described below, by way of example only, with reference to the accompanying drawings in which:

Figure 1 is a block diagram illustrating an embodiment of an apparatus;

Figure 2 is a block diagram illustrating the electrical configuration of the apparatus of Figure 1;

Figure 3 illustrates the situation in which the apparatus for alarming a decrease in tyre air pressure calls a tyre repair facility and teaches a route to the facility;

Figure 4 is a flowchart illustrating the processing of displaying the route to a nearest blowout repairing facility being open after a decrease in pressure is judged; and

Figure 5 is a flowchart illustrating the processing of reducing a threshold value so as to easily give an alarm.

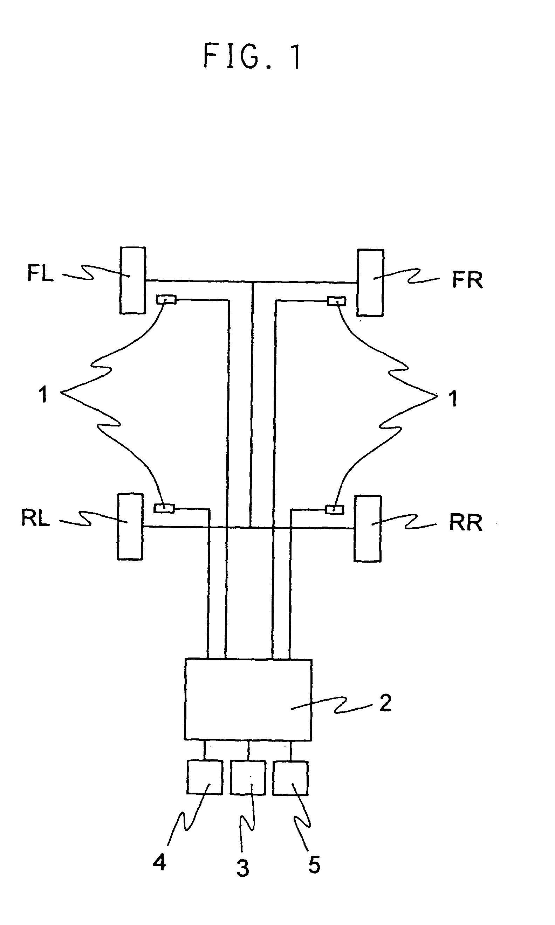

As shown in Figure 1, an embodiment of an apparatus for alarming decrease in tyre air pressure according to the present invention is so designed as to detect whether or not pneumatic pressures of any of four tyres FL, FR, RL and RR ($W_i$, i=1~4, 1: front left tyre, 2: front right tyre, 3: rear left tyre, 4: rear right tyre) attached to, for example, a four-wheeled vehicle are decreased, and is provided with conventional rotational information detecting means 1 respectively provided in connection with each tyre $W_i$.

The rotational information detecting means 1 takes the form of, for example, a wheel speed sensor for measuring rotational speed from the number of rotation pulses generated by using an electromagnetic pickup or the like, or an angular velocity sensor for measuring rotational speed from a voltage generated by using rotation of an electric dynamo. Output of the rotational information detecting means 1 and a lateral G sensor is applied to a control unit 2. The control unit 2 is also connected to a display device 3 for giving information on the tyre W; having a decreased pneumatic pressure The display device 3 comprises a liquid crystal display element, a plasma display element, a CRT or the like. There is also an initialisation switch 4 capable of being operated by a driver. In this case, reference numeral 5 denotes a navigation system.

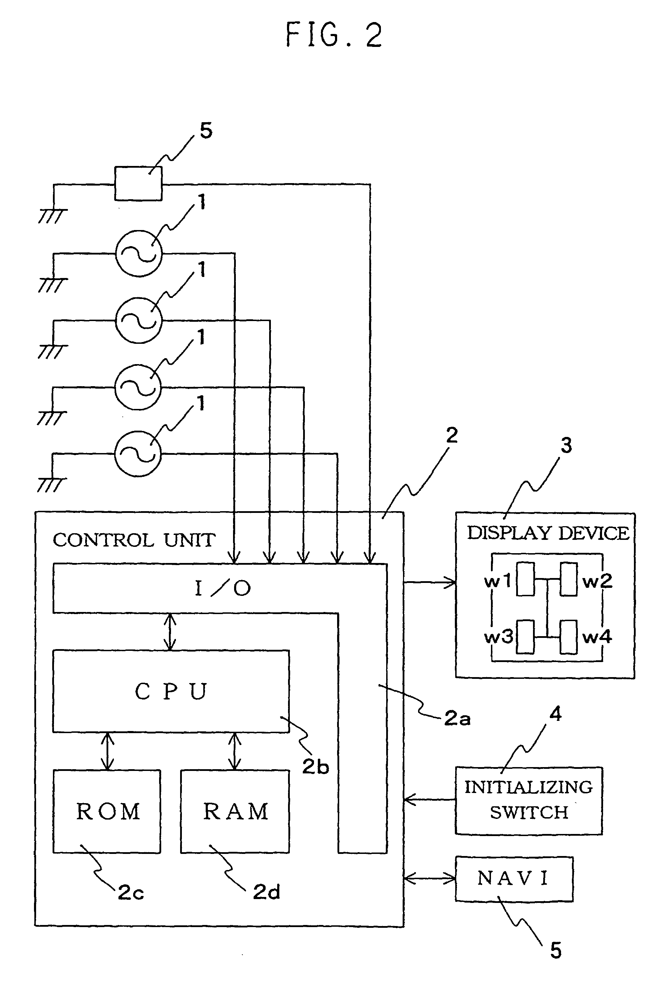

The control unit 2 includes, as shown in Figure 2, an I/O interface 2a required for taking and giving a signal from and to external devices, a CPU 2b functioning as a centre of the calculating process, a ROM 2c for storing a control operation program of the CPU 2b and a RAM 2d in which data is temporarily written or the written data is read at a time when the CPU 2b executes the control operation.

The present invention is based on the joint use or sharing of information stored in the apparatus for alarming a decrease in tyre air pressure and information stored in the navigation system.

The apparatus for alarming a decrease in tyre air pressure according to the present embodiment includes, for example, rotational information detecting means for detecting rotational information on each of the tyres, memory means for storing therein the rotational information on each of the tyres, calculating means for calculating a judged value based on the rotational information on each of the tyres, and judging means for judging a decrease in inner pressure of the tyre based on the judged value. The apparatus further includes travelling determining means for determining whether a vehicle should be stopped at once or the vehicle can still travel to some extent even though a decrease in tyre air pressure is judged; vehicle position detecting means for detecting a vehicle travelling position at the time of the judgement of the decrease in tyre air pressure; collating means for collating the detected vehicle travelling position with positional information on a tyre repair facility, which has been input previously; facility calling means for calling a nearest blowout repairing facility being open based on the collation by the collating means; and display means for displaying a route from the vehicle travelling position to the called facility.

In the present embodiment, the vehicle position detecting means, the collating means, the facility calling means and the display means are started to be operated in the case where the travelling determining means has determined that the vehicle can still travel to some extent.

That is to say, the apparatus for alarming a decrease in tyre air pressure is equipped with a function for determining whether or not the vehicle can reach the nearest repair facility based on the judged value for judging the decrease in pressure in the apparatus for alarming a decrease in tyre air pressure or its variation. For example, when the judged value has changed moderately and it is therefore judged that there is no possibility of an abrupt deflation after the judged value exceeds a predetermined threshold value and the decrease in pressure is determined, the driver is guided to the nearest repair facility. In this manner, the drive can be given a route to the repair facility which is open and so safely drive the vehicle, In contrast, the driver is called to stop the vehicle in the case where the judged value is markedly large or the variation is large and there is a danger of a complete deflation before the driver reaches the nearest repair facility. Consequently, the driver then replaces the tyre by himself or herself, and then can make contact with the nearest repair facility which is open or an on-site service to have the tyre replaced.

The method for determining whether the vehicle should be stopped at once or the vehicle can still travel to some extent when the decrease in tyre air pressure is judged is exemplified as follows:

A wheel speed per second in a sampling time is first captured based on a wheel speed pulse, a judged value of a decrease in pressure of a tyre (DEL) is calculated, the DEL values are averaged per sampling time, for example, every five seconds in order to enhance the accuracy of the judgement, past twelve 5-second average values (DEL5) are subjected to processing of moving averages, and then, the decrease in pressure is judged by the use of the resultant moving average value (DELAV), resulting in a judgement (1) or (2) under the following conditions (A) to (C):

(A) $| \text{DELAV} | \geq 0.1$
(B) $| \text{DEL5} | \geq 0.15$ occurs four times in sequence .
(C) $| \text{DEL5} | \geq 0.1$, and the condition that an increase in DEL5 of 0.033 or more occurs four times in sequence.

(1) When the condition (B) or (C) is satisfied, it is judged that the vehicle should be stopped at once.

(2) When the condition (A) is satisfied but the conditions (B) and (C) are not satisfied, it is judged that the pressure is decreased but not excessively and the vehicle can still travel to some extent.

The vehicle position detecting means can be a car navigation device using GPS antenna or the like.

Also the above-described car navigation device can be one which detects the travelling position by using an antenna for a GPS (Global Positioning System) or the like, inputs map data on the surroundings of the travelling position into a car navigation body via a CD-ROM, and displays geographic information on a display panel or the like through the processing of a map display routine. Furthermore, the car navigation device may receive road information from an outside transmitter such as a beacon or an FM transmitter installed with respect to a road via a beacon antenna, and additionally displays the road information on the display panel or the like through the processing of a displaying routine of the navigation body. In the case where the above-described car navigation device is used, the display panel can serve as the display means.

As the collating means, there can be used one which stores the positional information on, for example, the position, service day and service time of the tyre repair facility on a CD-ROM or the like in the form of a database, and collates the positional information with the detected vehicle travelling position so as to determine the facility which is open based on the current time and position, or calculates a distance based on the current time and position so as to make a search for the nearest facility.

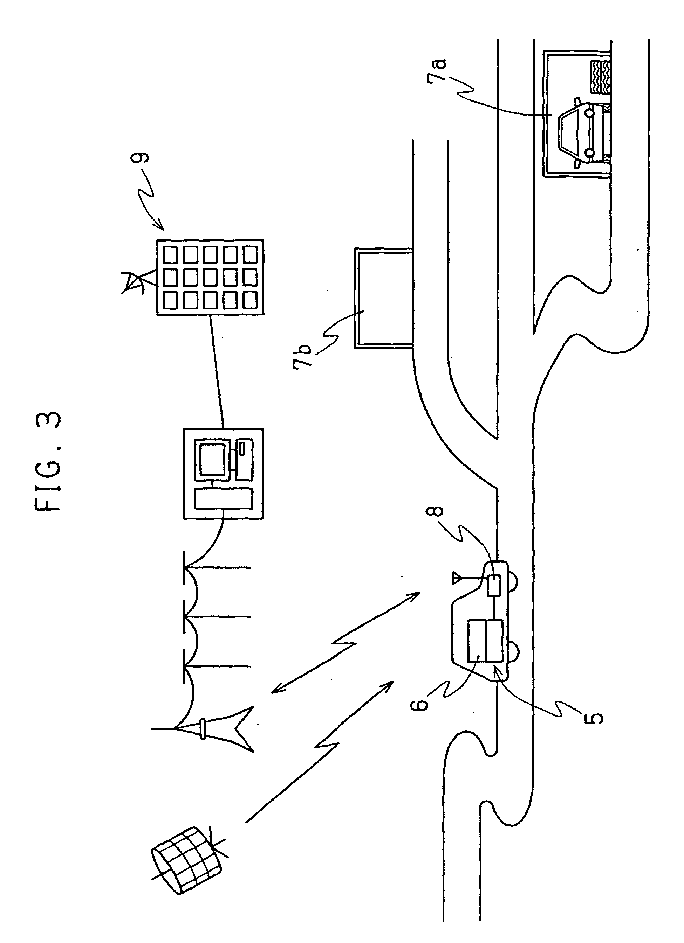

In the present embodiment, the vehicle position detecting means and the collating means constitute a navigation system 5, which is mounted on a vehicle, as illustrated in Figure 3.

Thus, when the apparatus 6 for alarming a decrease in tyre air pressure detects a decrease in tyre air pressure, the navigation system 5 finds the position, searches a nearest tyre repair facility 7a which is open at that time from the list of tyre repair facilities 7a and 7b which have been previously registered in the navigation system 5 and at where a tyre can be repaired, and then, teaches the driver the shortest route to the facility 7a.

In addition to the function of searching the position of the vehicle, information on facilities (such as a location, times of opening, closing days and a telephone number) in which the tyre can be repaired (such as a parking area, a service area, a gas station and a tyre shop) has been previously registered in the navigation system 5. Moreover, it is preferable that a dangerous region or the like in view of security should be registered as required.

In this manner, when the apparatus for alarming the decrease in tyre air pressure detects a decrease in pressure of a tyre, the apparatus first searches for the nearest repair facility which is open at that time on that day based on the information, and then, teaches the driver the shortest route to the facility. At the same time, the apparatus also display a telephone number of the like, thereby enabling the driver to make contact with the facility via a mobile phone or the like.

If there is no facility open thereabouts, the apparatus can display a telephone number of an on-site service.

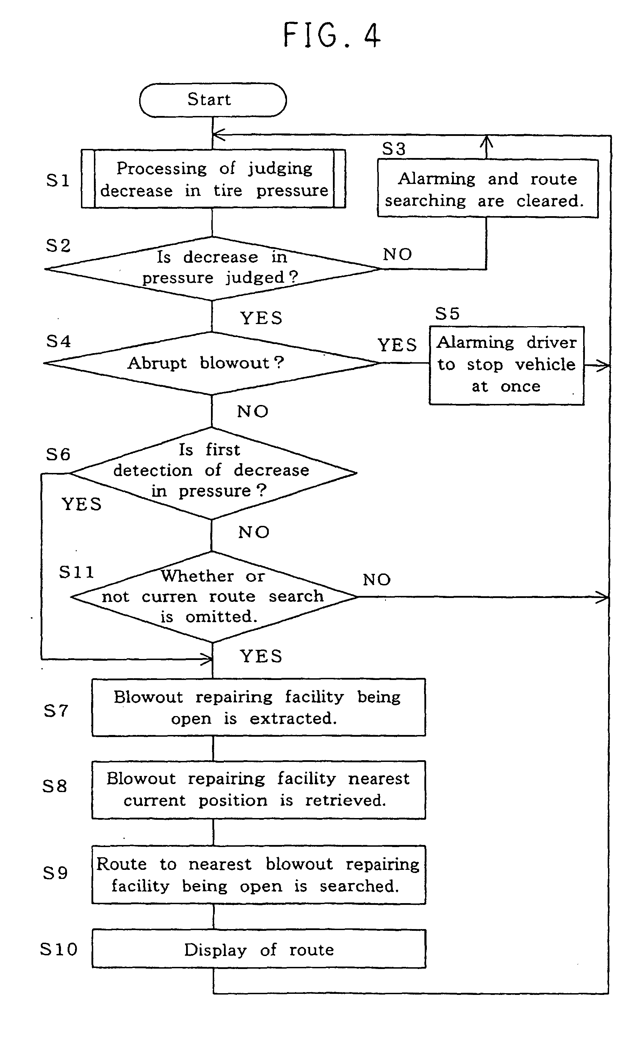

The embodiment according to the present invention will be described with reference to Figures 3 and 4. As illustrated in Figure 3, the apparatus is provided with communication means 8 capable of communicating with the outside from the vehicle. The communication means 8 can be a radio telephone line such as a PHS, a radio device in conformance with the radio telephone line or the like. The communication means 8 makes access to the positional information on the repair facility 7a or 7b input in a computer outside of the vehicle, for example, means such as a host computer 9 of the VICS (Vehicle Information Communication System) via the Internet.

First, as illustrated in Figure 4, the process of judging the decrease in tyre pressure of the travelling vehicle is performed (step S1). The process of judging the decrease in pressure in the apparatus for alarming the decrease in tyre air pressure at that time is performed according to, for example, the following procedures. After rotational information detecting means 1 outputs a pulse signal corresponding to the number of revolutions of each of tyres $W_i$ (hereinafter referred to as a wheel speed pulse), a CPU 2b calculates a rotational angular velocity $F_i$ of each of the tyres $W_i$ per predetermined sampled cycle $\Delta T$ (sec.), for example, per second based on the wheel speed pulse output from the rotational information detecting means 1.

Here, since manufactured tyres $W_i$ have variations in a specification (initial difference), the effective rolling radii of the tyres $W_i$ (values each obtained by dividing a distance advancing by one rotation by $2\pi$) are not necessarily equal even if all of the tyres $W_i$ have normal internal pressure. As a result, the rotational angular

velocities $F_i$ of the tyres $W_i$ are slightly different. Considering this, a corrected rotational angular velocity $F1_i$ to cancel the irregularity due to the initial difference is calculated. To be specific, the respective rotational angular velocity is corrected as follows:

$$F1_1 = F_1$$

$$F1_2 = mF_2$$

$$F1_3 = F_3$$

$$F1_4 = nF_4$$

Correction coefficients m and n are obtained as $m = F_1/F_2$ and $n = F_3/F_4$ by calculating the rotational angular velocity $F_i$ under conditions, for example, that a vehicle is running on a straight road and then obtaining the coefficients m and n based on the calculated rotational angular velocity $F_i$. Based on above $F1_i$, a vehicle speed V (Vi/4) is/are calculated.

Further, a pressure reduction judged value (DEL) for detecting decrease in air pressure of a tyre $W_i$ compares the difference between, for example, two sums of pairs of front-wheel tyres and rear-wheel tyres on a diagonal. Specifically, the sum of signals from one pair of wheels on a diagonal is subtracted from the sum of signals from the other pair of wheels on the diagonal, and a ratio of the subtraction result to the average value of the two sums is obtained from the following formula (1):

$$DEL = \frac{2 \times \{(V1 + V4) - (V2 + V3)\}}{V1 + V2 + V3 + V4} \times 100\% \quad (1)$$

Subsequently, as a result of the judgement about any decrease in pressure, if a decrease in pressure is not judged (step S2), alarming and route searching are cleared (step S3). In contrast, if a decrease in pressure is judged (step S2), it is judged whether the vehicle should be stopped at once since the judged value signifies an abrupt deflation or if the vehicle can still travel to some extent (step S4). In the case of substantial deflation, the driver is alarmed to stop the vehicle at once (step S5).

Next, in the case of no abrupt deflation (step S4), it is judged whether or not the decrease in pressure is judged by a first detection of the decrease in pressure (step S6). If the decrease in pressure is judged by the first detection of the decrease in pressure, the repair facility which is open is extracted (step S7). After the repair facility nearest the current position is searched and retrieved (steps S8 and S9), the apparatus displays the route to the repair facility so as to lead the driver (step S10). Here, since there is a danger of omission of the route search unless the decrease in pressure is judged by the first detection of the decrease in pressure in step S6, it is judged whether or not the current route search is omitted.

In this manner, the driver can know the route to the repair facility, and can safely drive there.

An apparatus for alarming a decrease in tyre air pressure in another preferred embodiment according to the present invention is provided with threshold value changing means for changing a threshold value of the judgement of a decrease in tyre air pressure according to a travelling position of a vehicle.

In judging the decrease in tyre air pressure (judgement of the decrease in pressure) in the apparatus for alarming the decrease in tyre air pressure, the threshold value of the judgement of the decrease in tyre air pressure is set lower than a usual value by the threshold value changing means during travelling in a region or a time zone in which it seems to be preferable to give an alarm indicating the decrease in pressure to the driver earlier than usual in the case where, for example, there is no repair facility open at that time thereabouts or the vehicle is travelling in a region of a low level of security based on information stored in a navigation system.

Namely, in order to avoid any situation in which the driver cannot reach a tyre facility, an alarm is given earlier than usual. The apparatus for alarming the decrease in tyre air pressure judges based on the judged value whether or not the tyre deflates, and if its threshold value is too small, a deflation might be erroneously judged in spite of a normal inner pressure. Therefore, the threshold value takes a large value to such a certain extent that no alarm is given with an error occurring under normal inner pressure.

However, from the viewpoint of the safeness for the driver, it is desirable to notify the driver earlier of the possibility of the decrease in tyre pressure even with a fear of an erroneous alarm during travelling in an area or time zone in which repair facilities are few in number or in a region of a low level of security. Consequently, in order to promote early inspection in a tyre repair facility, the threshold value is set to a slightly small value so as to easily give an alarm under the above-described circumstance.

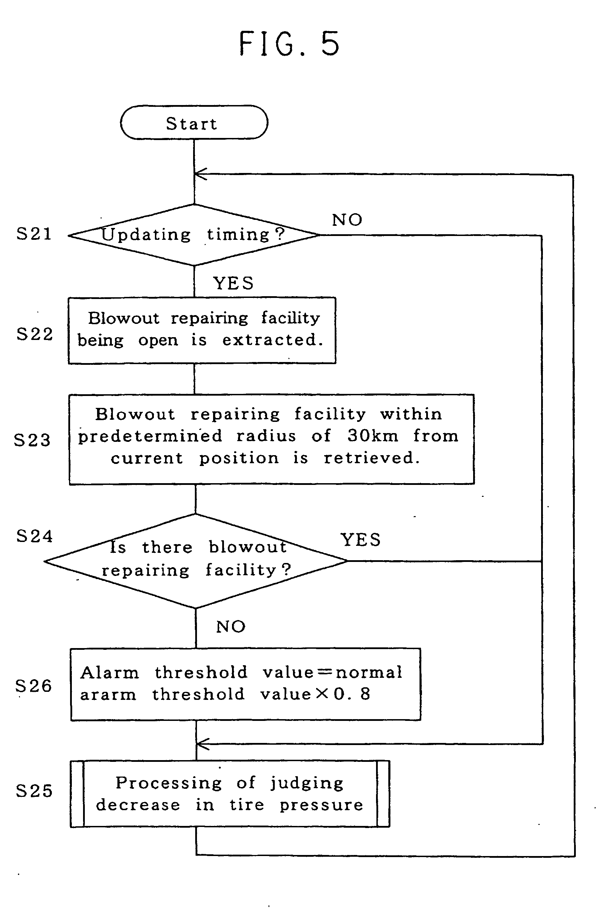

A further embodiment according to the present invention will be explained below with reference to Figure 5. First in step S21, a tyre repair facility which is open is extracted based on the current position at an updating timing, for example, once every ten minutes (step S22), and then, it is retrieved whether or not there is a deflation repair facility within a predetermined radius of 30 km from the current position (step S23). As a result of the retrieval, when there is a repair facility open within a radius of 30 km from the current position (step S24), the decrease in pressure is judged based on a normal alarm threshold value at the time of the decrease in tyre air pressure (step S25). In contrast, if there is no repair facility open within a radius of 30 km from the current position (step S24), the alarm threshold value at the time of the decrease in tyre air pressure is set to 0.8 times the normal threshold value since it seems to be preferable for the driver to be given an alarm of any decrease in pressure earlier than usual (step S26). Thereafter, the decrease in pressure is judged (step S25). Thus, the driver can be notified of the judgement of the decrease in pressure earlier than usual, and therefore, can safely drive.

Incidentally, in the above-described embodiments, the information registered in the navigation system can be updated by down loading the latest data from an information terminal by means such as a mobile telephone.

In this manner, the addition of the information registered in the navigation system to the conventional apparatus for alarming a decrease in tyre air pressure can provide not only the apparatus for simply alarming the decrease in tyre pressure but also the information for safely and speedily repairing the tyre, or can provide higher safeness for the driver by giving the alarm early according to the travelling region or time zone so as to avoid such a situation in which the driver cannot reach a repair facility.

As described, above, the apparatus for alarming a decrease in tyre air pressure according to the present invention can teach the route to the repair facility after giving the alarm of the decrease in tyre pressure, thus achieving repair and safe travelling.

## Claims

1. An apparatus for alarming a decrease in tyre air pressure which alarms a decrease in inner pressure of a tyre by using a judged value, comprising travelling determining means (2) for determining whether the vehicle should be stopped at once or the vehicle can still travel to some extent when the decrease in tyre air pressure is judged; vehicle position detecting means (5) for detecting the vehicle travelling position at the time of judgement of the decrease in tyre air pressure; **characterised by** collating means for collating the detected vehicle travelling position with positional information on a tyre repair facility (7a), which has been input previously; facility calling means (8) for calling a nearest blowout repairing facility being open based on the collation by the collating means; and display means (3) for displaying a route from the vehicle travelling position to the called facility, wherein the vehicle position detecting means (5), the collating means, the facility calling means and the display means are started to be operated in the case where the travelling determining means (2) determines that the vehicle can still travel to some extent.

2. An apparatus for alarming a decrease in tyre air pressure which alarms a decrease in inner pressure of the tyre by using a judged value, comprising vehicle position detecting means (5) for detecting a vehicle travelling position at the time of judgement of the decrease in tyre air pressure; **characterised by** collating means for collating the detected vehicle travelling position with positional information on a tyre repair facility (7a), which has been input previously; and threshold value changing means (2) for changing a threshold value of the judgement of the decrease in inner pressure of the tyres according to the vehicle travelling position.

3. An apparatus according to claim 1 or 2, **characterised in that** the decrease of inner pressure of a tyre uses a judged value calculated based on rotational information (1) obtained from tyres fitted to a four-wheeled vehicle.

4. An apparatus according to claim 1, 2 or 3, **characterised in that** the positional information on the tyre repair facility (7a) is input in a navigation system (5).

5. A method for alarming a decrease in tyre air pressure which alarms the decrease in inner pressure of the tyre by using a judged value, comprising the steps of: detecting a vehicle travelling position at the time of judgement of the decrease in tyre air pressure; **characterised by** collating the detected vehicle travelling position with positional information on a tyre repair facility, which has been input previously; calling the nearest open tyre repair facility based on the collation; and displaying a route from the vehicle travelling position to the called facility, wherein the steps are started to be performed in the case where it is determined that the vehicle can still travel to some extent.

6. A method for alarming a decrease in tyre air pressure which alarms the decrease in inner pressure of the tyre by using a judged value, comprising the steps of: detecting a vehicle travelling position at the time of judgement of the decrease in tyre air pressure; **characterised by** collating the detected vehicle travelling position with positional information on a tyre repair facility, which has been input previously; and changing a threshold value for the judgement of the decrease in inner pressure of the tyres according to the vehicle travelling position.

7. A method according to claim 5 or 6, **characterised in that** the decrease of inner pressure of a tyre uses a judged value calculated based on rotational information obtained from tyres fitted to a four-wheeled vehicle.

8. A method according to of claim 5, 6 or 7, **charac-**

terised in that the method includes a step of accessing positional information on the tyre repair facility from a computer (9) outside of the vehicle by means of a communication means capable of communicating with the vehicle.

## Patentansprüche

1. Vorrichtung zum Warnen vor einer Abnahme eines Luftdruckes in einem Reifen, die vor einer Abnahme des Innendruckes eines Reifens unter Verwendung eines Beurteilungswertes warnt, mit einem Reisebestimmungsmittel (2) zum Bestimmen, ob das Fahrzeug sofort angehalten werden sollte oder ob das Fahrzeug noch über eine gewisse Strecke fahren kann, wenn eine Abnahme des Luftdruckes des Reifens festgestellt wird, und einem Mittel zur Fahrzeugstandortfeststellung (5) zum Feststellen der Reisewegstandortes des Fahrzeuges zum Zeitpunkt der Beurteilung der Abnahme des Luftdruckes des Reifens, **gekennzeichnet durch** ein Zusammenstellungsmittel zum Zusammenstellen des festgestellten Reisewegstandortes des Fahrzeugs mit Standortinformation über eine Reifenreparaturwerkstatt (7a), die im Voraus eingegeben worden ist, ein Werkstattanrufmittel (8) zum Anrufen der nächstliegenden geöffneten Reifenpannenreparaturwerkstatt auf der Basis der Zusammenstellung **durch** das Zusammenstellungsmittel, und ein Anzeigemittel (3) zum Anzeigen einer Route von dem Reisewegstandort des Fahrzeugs zu der angerufenen Werkstatt, wobei in dem Fall begonnen wird, das Mittel zum Feststellen des Reisewegstandortes (5), das Zusammenstellungsmittel, das Werkstattanrufmittel und das Anzeigemittel zu betreiben, dass das Reisebestimmungsmittel (2) bestimmt, dass das Fahrzeug noch über eine gewisse Strecke fahren kann.

2. Vorrichtung zum Warnen vor einer Abnahme eines Luftdruckes in einem Reifen, die vor einer Abnahme des Innendruckes des Reifens unter Verwendung eines Beurteilungswertes warnt, mit einem Mittel zur Fahrzeugstandortfeststellung (5) zum Feststellen des Standortes des Fahrzeugs zum Zeitpunkt der Beurteilung der Abnahme des Luftdruckes des Reifens, **gekennzeichnet durch** ein Zusammenstellungsmittel zum Zusammenstellen des festgestellten Reisewegstandortes des Fahrzeuges mit Standortinformation über eine Reifenreparaturwerkstatt (7a), die im Voraus eingegeben worden ist, und ein Mittel zur Schwellenwertänderung (2) zum Ändern eines Schwellenwertes der Beurteilung der Abnahme des Innendruckes der Reifen gemäß dem Reisewegstandort des Fahrzeugs.

3. Vorrichtung nach Anspruch 1 oder 2, **dadurch ge-**

kennzeichnet, dass die Abnahme des Innendruckes eines Reifens einen Beurteilungswert verwendet, der auf der Basis von Rotationsinformation (1) berechnet wird, die von an einem Vierradfahrzeug aufgezogenen Reifen erhalten wird.

4. Vorrichtung nach Anspruch 1, 2 oder 3, **dadurch gekennzeichnet, dass** die Standortinformation über die Reifenreparaturwerkstatt (7a) in ein Navigationssystem (5) eingegeben ist.

5. Verfahren zum Warnen vor einer Abnahme eines Luftdruckes in einem Reifen, die vor einer Abnahme des Innendruckes des Reifens unter Verwendung eines Beurteilungswertes warnt, mit den Schritten: Feststellen eines Reisewegstandortes eines Fahrzeugs zum Zeitpunkt der Beurteilung der Abnahme des Luftdruckes eines Reifens, **gekennzeichnet durch** Zusammenstellen des festgestellten Reisewegstandortes des Fahrzeugs mit Standortinformation über eine Reifenreparaturwerkstatt, die im Voraus eingegeben worden ist, Anrufen der nächstliegenden offenen Reifenreparaturwerkstatt auf der Basis Zusammenstellung, und Anzeigen einer Route von dem Reisewegstandort des Fahrzeugs bis zu der angerufenen Werkstatt, wobei die Durchführung der Schritte in dem Fall begonnen wird, dass bestimmt wird, dass das Fahrzeug noch eine gewisse Strecke fahren kann.

6. Verfahren zum Warnen vor einer Abnahme eines Luftdruckes in einem Reifen, das vor der Abnahme des Innendruckes des Reifens unter Verwendung eines Beurteilungswertes warnt, mit den Schritten: Feststellen eines Reisewegstandortes eines Fahrzeugs zum Zeitpunkt der Beurteilung der Abnahme des Reifenluftdruckes, **gekennzeichnet durch** Zusammenstellen des festgestellten Reisewegstandortes des Fahrzeugs mit Standortinformation über eine Reifenreparaturwerkstatt, die im Voraus eingegeben worden ist, und Ändern eines Schwellenwertes für die Beurteilung der Abnahme des Innendruckes der Reifen gemäß dem Reisewegstandort des Fahrzeugs.

7. Verfahren nach Anspruch 5 oder 6, **dadurch gekennzeichnet, dass** die Abnahme des Innendruckes eines Reifens einen Beurteilungswert verwendet, der auf der Grundlage von Rotationsinformation berechnet wird, die von an einem Vierradfahrzeug aufgezogenen Reifen erhalten wird.

8. Verfahren nach Anspruch 5, 6 oder 7, **dadurch gekennzeichnet, dass** das Verfahren den Schritt des Zugreifens auf Standortinformation über die Reifenreparaturwerkstatt von einem Computer (9) außerhalb des Fahrzeugs mittels eines zur Kommunikation mit dem Fahrzeug fähigen Kommunikationsmittels umfasst.

**Revendications**

**1.** Dispositif d'alarme détectant une diminution de la pression interne dans un pneu, qui détecte une diminution d'une pression interne d'un pneu à l'aide d'une valeur estimée, comprenant un moyen de détermination du trajet (2) pour déterminer si le véhicule doit immédiatement être arrêté ou si le véhicule peut encore rouler sur une certaine distance lors de l'estimation de la diminution de la pression d'air dans le pneu ; un moyen de détection de la position du véhicule (5) pour détecter la position du véhicule au moment de l'estimation de la diminution de la pression d'air du pneu ; **caractérisé par** un moyen de fusionnement pour fusionner la position détectée du véhicule avec l'information de la position d'une installation de réparation de pneu (7a) qui a été entrée précédemment ; un moyen d'appel de l'installation (8) pour appeler l'installation de réparation de pneu dégonflé ouvert le plus proche sur la base du fusionnement par le moyen de fusionnement ; et un moyen d'affichage (3) pour afficher un trajet de la position du véhicule vers l'installation appelée, dans lequel le moyen de détection de la position du véhicule (5), le moyen de fusionnement, le moyen d'appel de l'installation et le moyen d'affichage sont démarrés pour fonctionner dans le cas où le moyen de détermination du trajet (2) détermine que le véhicule peut encore rouler sur une certaine distance.

**2.** Dispositif d'alarme détectant une diminution de la pression interne dans un pneu, qui détecte une diminution d'une pression interne d'un pneu à l'aide d'une valeur estimée, comprenant un moyen de détection de la position du véhicule (5) pour détecter une position du véhicule au moment de l'estimation de la diminution de la pression d'air du pneu ; **caractérisé par** un moyen de fusionnement pour fusionner la position détectée du véhicule avec l'information de la position d'une installation de réparation de pneu (7a) qui a été entrée précédemment ; et un moyen de modification de la valeur seuil (2) pour modifier une valeur seuil de l'estimation de la diminution de la pression d'air des pneus selon la position du véhicule.

**3.** Dispositif selon la revendication 1 ou 2, **caractérisé en ce que** la diminution de la pression interne d'un pneu est une valeur estimée calculée sur la base d'une information de rotation (1) obtenue à partir de pneus montés sur un véhicule à quatre roues.

**4.** Dispositif selon la revendication 1, 2 ou 3, **caractérisé en ce que** l'information de la position de l'installation de réparation du pneu (7a) est entrée dans un système de navigation (5).

**5.** Procédé d'alarme détectant une diminution de la pression interne dans un pneu, qui détecte une diminution d'une pression interne d'un pneu à l'aide d'une valeur estimée, comprenant les étapes suivantes : détection de la position du véhicule au moment de l'estimation de la diminution de la pression d'air du pneu ; **caractérisé par** le fusionnement de la position du véhicule avec l'information de la position d'une installation de réparation de pneu, qui a été entrée précédemment ; appel de l'installation de réparation de pneu ouverte le plus proche sur la base du fusionnement ; affichage d'un trajet de la position du véhicule vers l'installation appelée, dans lequel les étapes sont démarrées pour être réalisées dans le cas où il est déterminé que le véhicule peut encore rouler sur une certaine distance.

**6.** Procédé d'alarme détectant une diminution de la pression interne dans un pneu, qui détecte une diminution d'une pression interne d'un pneu à l'aide d'une valeur estimée, comprenant les étapes suivantes : détection de la position du véhicule au moment de l'estimation de la diminution de la pression d'air du pneu ; **caractérisé par** le fusionnement de la position du véhicule avec l'information de la position d'une installation de réparation de pneu, qui a été entrée précédemment ; modification d'une valeur seuil pour l'estimation de la diminution d'une pression interne des pneus selon la position du véhicule.

**7.** Procédé selon la revendication 5 ou 6, **caractérisé en ce que** la diminution de la pression interne du pneu utilise une valeur estimée calculée sur la base d'une information de rotation obtenue à partir de pneus montés sur un véhicule à quatre roues.

**8.** Procédé selon la revendication 5, 6 ou 7, **caractérisé en ce que** le procédé comprend une étape d'accès à l'information sur la position d'une installation de réparation de pneu à partir d'un ordinateur (9) se trouvant à l'extérieur du véhicule à l'aide d'un moyen de communication capable de communiquer avec le véhicule.

# FIG. 1

# FIG. 2

# FIG. 3

EP 1 184 208 B1

# FIG. 4

```
                        ┌──────────┐
                        │  Start   │
                        └────┬─────┘
                             │
     ┌─────────────────────────────────┐   S3  ┌──────────────────────────┐
  S1 │ Processing of judging           │       │ Alarming and route       │
     │ decrease in tire pressure       │       │ searching are cleared.   │
     └─────────────────┬───────────────┘       └──────────────────────────┘
                       │
  S2          ◇ Is decrease in ◇       NO
              ◇ pressure judged? ◇ ─────────────
                       │ YES                          S5
                       │                         ┌──────────────────┐
  S4        ◇ Abrupt blowout? ◇    YES           │ Alarming driver  │
                       │          ──────────────→│ to stop vehicle  │
                       │ NO                       │ at once          │
                       │                         └──────────────────┘
                ◇ Is first          ◇
  S6            ◇ detection of decrease ◇
                ◇ in pressure?      ◇
              YES  │ NO
                   │
  S11       ◇ Whether or        ◇    NO
            ◇ not curren route search ◇ ──────────────→
            ◇ is omitted.        ◇
                   │ YES
     ┌─────────────────────────────────┐
  S7 │ Blowout repairing facility being│
     │ open is extracted.              │
     └─────────────────┬───────────────┘
     ┌─────────────────────────────────┐
  S8 │ Blowout repairing facility nearest│
     │ current position is retrieved.  │
     └─────────────────┬───────────────┘
     ┌─────────────────────────────────┐
  S9 │ Route to nearest blowout repairing│
     │ facility being open is searched.│
     └─────────────────┬───────────────┘
     ┌─────────────────────────────────┐
 S10 │        Display of route         │
     └─────────────────────────────────┘
```

# FIG. 5

Start

S21 — Updating timing? — NO

YES

S22 | Blowout repairing facility being open is extracted.

S23 | Blowout repairing facility within predetermined radius of 30km from current position is retrieved.

S24 — Is there blowout repairing facility? — YES

NO

S26 | Alarm threshold value＝normal ararm threshold value×0. 8

S25 | Processing of judging decrease in tire pressure